# EUROPÄISCHE PATENTANMELDUNG

(11) **EP 0 689 861 A1**
(43) Veröffentlichungstag der Anmeldung: **03.01.1996**
(21) Anmeldenummer: 95107706.4
(22) Anmeldetag: 20.05.1995
(51) Int. Cl.: B01D 53/04, B01D 46/10

(54) **Gasfilter**

(30) Priorität: 24.06.1994 DE 4421911
(71) Anmelder: FRIATEC AG KERAMIK- UND KUNSTSTOFFWERKE, D-68229 Mannheim (DE)
(72) Erfinder: Werner, Roland, D-67550 Worms (DE); Cuntz, Hans Peter, D-68775 Ketsch (DE); Mühlemeier, Jörg-Florian, D-71672 Marbach (DE)
(74) Vertreter: Klose, Hans, Dipl.-Phys.

(57) **Zusammenfassung**

Ein Gasfilter, insbesondere Abluftfilter, enthält ein Gehäuse (2) und im Inneren wenigstens einen Filtermodul (38, 39) mit einer Filtermasse (64), insbesondere aus Aktivkohle, sowie eine Einströmöffnung (16, 17) für Schadgas und ferner eine Austrittsöffnung (38) für gereinigtes Gas. Ein derartiges Gasfilter soll mit geringem konstruktiven Aufwand dahingehend weitergebildet werden, daß bei kompakter Bauweise eine funktionssichere Adsorption der im zugeführten Gasstrom enthaltenen Schadstoffe gewährleistet ist. Es wird vorgeschlagen, daß im Gehäuse (2) ein Rahmen (4) zur Aufnahme von vorzugsweise wenigstens zwei der Filtermodule (38, 39) vorgesehen ist, daß die Filtermodule (38, 39) in den Rahmen (4) einsetzbar und aus diesem herausnehmbar angeordnet sind und die Filtermodule (38, 39) vorzugsweise in Richtung zu einem Einströmkanal (14, 15) mittels eines Spannelements (46, 47) im Rahmen (4) dicht festspannbar sind.

## Beschreibung

Die Erfindung bezieht sich auf ein Gasfilter, insbesondere Abluftfilter, gemäß den im Oberbegriff des Patentanspruchs 1 angegebenen Merkmalen.

Aus der DE 33 09 497 C2 ist ein derartiges Gasfilter bekannt, welches ein quaderförmiges Gehäuse mit einer Einströmöffnung und einer Ausströmöffnung aufweist. Das Gehäuse enthält einen Filtereinsatz aus wenigstens zwei Filtern, deren voneinander abgekehrte Stirnwände gasdurchlässig ausgebildet sind, während die Seitenwände sowie der Boden und der Deckel gasundurchlässig ausgebildet und gegenüber dem Gehäuse gegen Gasdurchtritt abgedichtet sind. Die vom Gas durchströmten Stirnwände der Filterkammern sind lotrecht ausgerichtet und weisen zueinander einen vorgegebenen Abstand auf, wobei die Stirnwände ferner in ihrem obersten Bereich auf zumindest 10 % der Wandhöhe gasundurchlässig ausgebildet sind. Durch diese Ausbildung des Gasfilters wird der Ausnutzungsgrad der Filtermasse verbessert und außerdem die Gefahr von Schadgasdurchbrüchen verringert. Die Filtereinsätze sind auf umlaufenden Tragleisten angeordnet und auf der Anströmseite ist oberhalb der Filtereinsätze ein gemeinsames Feinstaubfilter angeordnet.

Ferner ist aus der DE 19 45 453 B2 eine Filterpatrone mit einem etwa U-förmigen und auf einer Seite offenen Rahmen bekannt. In dem Rahmen sind perforierte Platten beabstandet angeordnet, zwischen welchen Kammern mit Adsorptionsmaterial angeordnet sind. Es sind zwei derartige mit Adsorptionsmaterial gefüllte Kammern vorhanden, zwischen welchen eine Gasführungskammer angeordnet ist, wobei wenigstens eine Abstandsstange sich durch die Gasführungskammer und die Kammern mit dem Adsorptionsmaterial erstreckt. Hierdurch soll die Funktionstüchtigkeit auch bei hohen Drücken, Temperaturen und Strömungsgeschwindigkeiten erreicht und der Austausch des Adsorptionsmaterials als Einheit mit wenigen Handgriffen ermöglicht werden. Zur Anordnungs derartiger Filterpatronen oder Filtermodulen in einem Gasfilter sind dieser Druckschrift keine besonderen Einzelheiten zu entnehmen.

Hiervon ausgehend liegt der Erfindung die Aufgabe zugrunde, das Gasfilter der genannten Art mit geringem konstruktivem Aufwand dahingehend weiterzubilden; daß bei kompakter Bauweise eine funktionssichere Adsorption der im zugeführten Gasstrom enthaltenen Schadstoffe gewährleistet ist. Das Gasfilter soll die Adsorption aller in einem Labor gebräuchlichen gefährlichen Lösungsmitteldämpfe sofort am Ort der Entstehung ermöglichen und einen aktiven Beitrag zum Umwelt- und Gesundheitsschutz leisten. Ferner soll das Gasfilter einen problemlosen Einbau und Austausch der Filtereinsätze ermöglichen.

Die Lösung dieser Aufgabe erfolgt gemäß den kennzeichnenden Merkmalen des Patentanspruchs 1.

Das vorgeschlagene Gasfilter, welches insbesondere als Abluftfilter für den Laborbetrieb zum Einsatz gelangt, weist einen kompakten Aufbau auf und ermöglicht zuverlässig die Adsorption der vor allem in einem Labor üblichen gefährlichen Lösungsmitteldämpfe. Das lösungsmittelhaltige Schadgas wird mit einem absaugseitigen oder wahlweise mit einem in das Gasfilter integrierten Spezial-Ventilator durch das Gasfilter gesaugt. Das einströmende Schadgas gelangt auf kürzestem Wege über wenigstens einen Gaseintrittstutzen, welcher insbesondere vertikal ausgerichtet ist, in den Filterraum. In dem Filterraum ist in zweckmäßiger Weise ein Rahmen mit Filtereinsätzen angeordnet welche nachfolgend auch als Filtermodule bezeichnet werden. Bedarfsweise können mehrere derartige Filtereinsätze oder Filtermodule übereinander angeordnet werden. Die Filtermodule sind im wesentlichen quer zur Strömungsrichtung des zu reinigenden Schadgases in den Rahmen des Filtergehäuses einsetzbar bzw. für Wartungsarbeiten oder Austausch herausnehmbar. Die Filtermodule sind als Triplefilter ausgebildet und enthalten einen Vorfilter, einen Aktivkohlefilter und einen Feinfilter. Der Vorfilter hält Staubpartikel ab, der Aktivkohlefilter adsorbiert Lösungsmittel und das nachgeschaltete Feinfilter ist als Endstufe ausgebildet und dient zur Zurückhaltung von Partikeln, insbesondere aus dem Aktivkohlefilter, zum Schutz des weiterführenden Leitungssystems.

Das aus dem Filtermodul austretende gereinigte Gas gelangt in einen Abströmkanal, welcher zweckmäßig zwischen zwei in horizontaler Richtung gegenüberliegenden Filtermodulen vorgesehen ist. Das Filtergehäuse weist insbesondere an seiner Vorderseite eine Revisionstür auf, welche bedarfsweise geöffnet werden kann, damit die Filtermodule leicht zugänglich sind. Das Gehäuse des Gasfilters enthält den Rahmen zur Aufnahme der einzelnen Filtermodule. Der Rahmen weist im Bereich des Einströmkanals Dichtungen auf, an welche der jeweilige Filtermodul mittels Spannelementen anpreßbar ist, so daß das gesamte Schadgas sicher den Filtermodul durchströmt. Die Spannelemente können schnell und problemlos gelöst werden, so daß dann der einzelne Filtermodul aus dem Rahmen herausgezogen und gegen einen anderen ausgewechselt werden kann.

Das durch den Abströmkanal strömende und gereinigte Gas wird einem Adsorptions-Controller zugeführt, dessen Meßwertegeber abströmseitig, insbesondere in einem Meßraum angeordnet ist. Mittels des Adsorptions-Controllers wird der Lösungsmittelgehalt des Abgases und damit der Sättigungsgrad der Aktivkohle unter Berücksichtigung zulässiger Grenzwerte ermittelt, bevor das Gas aus dem Gehäuse, insbesondere durch einen Abgasstutzen, ausströmt. Bis zur Sättigung der Aktivkohle adsorbiert der Filtermodul bzw. Triplefilter je nach Konzentration 96 bis 99 % der eingeleiteten Lösungsmittel. Beim Erreichen der Sättigungsgrenze fallt bekanntlich der Abscheidegrad ab und mittels des Adsorptions-Controllers wird die Notwendigkeit des Filterwechsels erfaßt und angezeigt.

Besondere Ausgestaltungen und Weiterbildungen sind in den Unteransprüchen sowie der Folgenden Beschreibung angegeben.

Die Erfindung wird nachfolgend anhand der in der Zeichnung dargestellten Ausführungsbeispiele näher erläutert. Es zeigen:
- Fig. 1: schematisch eine Frontansicht des Gasfilters,
- Fig. 2: schematisch eine seitliche Ansicht in Blickrichtung II, gemäß Fig. 1,
- Fig. 3: vergrößert eine Teilansicht mit zwei Filtermodulen, entspr. Fig. 1,
- Fig. 4: eine Aufsicht in Blickrichtung IV, gemäß Fig. 3,
- Fig. 5: schematisch eine Ansicht einer weiteren Ausführungsform,
- Fig. 6: eine Aufsicht in Blickrichtung VI auf die in Fig. 5 dargestellte Ausführungsform.

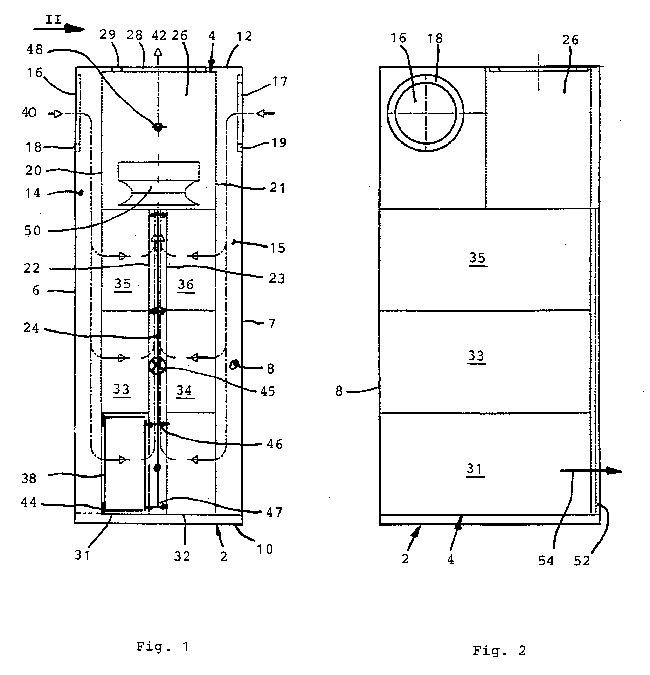

Fig. 1 zeigt schematisch ein Gehäuse 2 des Gasfilters, in welchen ein mit strichpunktierten Linien angedeuteter Rahmen 4 vorgesehen ist. Das Gehäuse 2 besteht aus geeignetem korrosionsbeständigem Material, wobei die beiden Seitenwände 6, 7, die hinter der Zeichenebene liegende Rückwand 8 sowie Boden 10 und Decke 12 dicht miteinander verbunden sind. Das Gehäuse enthält an der Vorderseite, also vor der Zeichenebene, eine sich über die gesamte Breite und/oder Höhe des Gehäuses 2 erstreckende Tür. Ist diese Tür geschlossen, so ist der vom Gehäuse 2 umschlossene Innenraum gegenüber der Umgebung dicht abgeschlossen. Bei geöffneter Tür ist der im Inneren des Gehäuses 2 angeordnete Rahmen 4 leicht zugänglich, so daß die nachfolgend noch zu erläuternden Filtermodule problemlos eingesetzt bzw. aus dem Rahmen 4 herausgenommen werden können.

Im Inneren des Gehäuses sind zwischen dem Rahmen 4 und den Seitenwänden 6, 7 sind jeweils erste Kanäle 14, 15 vorgesehen, welche als Einströmkanäle für das Schadgas in dieser Ausführungsform ausgebildet sind. Die Seitenwände 6, 7 enthalten insbesondere im oberen Bereich Öffnungen 16, 17 für den Eintritt des Schadgases. Zum Anschluß von entsprechenden Rohren oder Leitungen sind diese Öffnungen 16, 17 vorzugsweise mit jeweils einem Blockflansch 18, 19 ausgerüstet. Der Rahmen 4 enthält Außenwände 20, 21, wobei zwischen diesen und den Seitenwänden 6, 7 erfindungsgemäß die genannten ersten, als Einströmkanäle ausgebildeten Kanäle 14, 15 vorhanden sind. Des weiteren enthält der Rahmen 4 im Inneren zwei einander gegenüberliegende Innenwände 22, 23, zwischen welchen ein gemeinsamer, zentraler Kanal 24 vorhanden ist, welcher als Abströmkanal ausgebildet ist.

In einer alternativen Ausgestaltung können die ersten Kanäle als Abströmkanäle ausgebildet sein, während der gemeinsame, zentrale Kanal 24 als Einströmkanal ausgebildet ist und die Strömungsrichtung des Schadgases im Vergleich mit der dargestellten Ausführungsform in entgegengesetzter Richtung verläuft. Nachfolgend wird lediglich der Einfachheit halber von Einströmkanälen 14, 15 und dem zentralen Abströmkanal 24 gesprochen, obgleich im Rahmen der Erfindung die Strömungsrichtung auch entgegengesetzt sein kann.

Die Einströmkanäle 14, 15 erstrecken sich im wesentlichen über die gesamte Höhe des Gehäuses 2, während der Abströmkanal 24 im oberen Bereich in einen Meßraum 26 mündet, aus welchem heraus eine Austrittsöffnung 28 aus dem Gehäuse 2 nach außen führt. An der Austrittsöffnung 28 ist wiederum ein Blockflansch 29 zum Anschluß eines Rohres oder dergleichen für die gereinigte Abluft vorhanden. Die Einströmkanäle 14, 15 werden hinten von der Rückwand 8 des Gehäuses 2 begrenzt, während im Bereich vor der Zeichenebene die Einströmkanäle 14, 15 von einer Vorderwand begrenzt werden, welche den jeweiligen Strömungskanal 14, 15 über die gesamte Breite zwischen der jeweiligen Seitenwand 6, 7 und der Außenwand 20, 21 des Rahmens 4 dicht abschließen.

Der Rahmen 4 enthält eine Anzahl von Kammern 31-36. Es sind jeweils zwei dieser Kammern 31-36 in der dargestellten Weise horizontal einander gegenüberliegend angeordnet, wobei zwischen den Kammern der zentrale Abströmkanal 24 vorhanden ist. In den Kammern 31, 32 ist jeweils ein Filtereinsatz oder Filtermodul 38 angeordnet. Es ist hier nur in der unteren Kammer 31 ein derartiger Filtermodul 38 schematisch angedeutet. Jede der Kammern 31-36 ist im wesentlichen über ihre gesamte Hohe und Tiefe zum jeweiligen Einströmkanal 14, 15 sowie zum Abströmkanal 24 offen ausgebildet, so daß entsprechend den strichpunktierten Pfeilen 40 das Schadgas in die jeweilige Kammer 31-36 sowie den dort vorhandenen Filtermodul 38 einströmen kann und nach Reinigung entsprechend den strichpunktierten Pfeilen 42 als gereinigtes Gas durch den Abströmkanal 24 nach oben in den Meßraum 26 abströmen kann. Wie anhand des in der Kammer 31 angeordneten Filtereinsatz 38 angedeutet, ist zur Seite des Einströmkanals 14 am Rand der Kammeröffnung eine umlaufende Dichtung 44 vorhanden. Der Filtereinsatz 38 wird mittels Spannelementen 46, 47 gegen die Dichtung 44 gepreßt, so daß keine Falschluft vom Einströmkanal 14 bzw. 15 zum Abströmkanal 24 möglich ist.

Wie bereits ausgeführt, sind die Kammern 31-36 jeweils zum Einströmkanal und zum Abströmkanal vollständig offen. Ferner sind diese Kammern 31-36 erfindungsgemäß im wesentlichen quer zur Strömungsrichtung zur Seite hin derart offen, daß die einzelnen Filtereinsätze 38 zur Seite herausgezogen bzw. von der genannten Seite in die Kammern eingeschoben werden können. Das Gehäuse 2 weist an dieser Seite die eingangs bereits erwähnte Tür auf und bei geöffneter Tür ist das Einsetzten bzw. Herausnehmen der Filtermodule problemlos möglich. Zweckmäßig handelt es sich bei der genannten Seite mit der Tür um die Frontseite des Gasfilters, so daß im eingebauten Zustand desselben bedarfsweise die Filtermodule ausgetauscht werden können. Die in den Kammern 31-36 von der Vorderseite her einschiebbaren Filtermodule werden jeweils paarweise mittels Spannelementen in den Kanälen in Richtung zu den Seitenwänden 6 bzw. 7 hin festgespannt. Es ist ein zentrales Bedienelement 45 in Form eines Handrades oder dergleichen vorgesehen, welches über Gewindestangen, Hebel oder dergleichen auf die jeweiligen Spannelemente einwirkt, um die einzelnen Filtermodule 38, 39 zu lösen oder gegeneinander zur zugeordneten Seitenwand hin im Rahmen 4 zu verspannen.

Im Meßraum 26 ist ein Meßwertgeber 48 eines hier nicht weiter dargestellten Adsorptions-Controllers angeordnet. Der Meßwertgeber 48 ist zweckmäßig an der genannten Tür des Gehäuses 2 befestigt, wobei ein hier nicht weiter dargestelltes Elektrokabel zur Elektronik des Adsorptions-Controllers geführt ist. Mittels des Meßwertgebers 48 können Anteile von Schadstoffen, insbesondere Lösungsmittel, im Abgas erfaßt werden. Überschreiten aufgrund gesättigter Filtermodule die Meßwerte vorgebbare Grenzwerte an Schadstoffen und/oder Lösungsmittel, so werden mittels des Adsorptions-Controllers optische oder akustische Signale gegeben, aufgrund welcher vor allem der Austausch der Filtermodule durchgeführt werden soll.

Ferner kann als Option im Meßraum 26 ein Ventilator 50 zur Überwindung insbesondere eines Druckverlustes in dem Gasfilter vorgesehen sein. Sofern in dem Abluftsystem ein hinreichend starkes Druckgefälle vorhanden ist, ist ein Ventilator natürlich entbehrlich.

Fig. 2 zeigt eine seitliche Ansicht des Gasfilters, wobei hier die obere Einströmöffnung 16 mit dem Blockflansch 18 gut zu erkennen ist. Innerhalb des Gehäuses 2 sind die übereinander angeordneten drei Kammern 31, 33, 35 schematisch angedeutet, in welchen die Filtermodule angeordnet sind. Es versteht sich, daß im Rahmen der Erfindung auch eine andere Anzahl von derartigen Kammern bzw. Filtermodulen vorgesehen sein kann. Unabhängig von der jeweiligen Ausführungsform sind in zweckmäßiger Weise zumindest zwei Filtermodule vorgesehen, welche in der entgegengesetzten Strömungsrichtung vom Gasstrom durchströmt sind. An der Vorderseite ist die sich im wesentlichen über die gesamte Höhe und Breite des Gehäuses 2 erstreckende und bezüglich des Gehäuses 2 abgedichtete Tür 52 angeordnet, welche an einer Seitenwand angelenkt ist und bedarfsweise geöffnet werden kann. Die einzelnen Filtermodule lassen sich bei geöffneter Tür 52 in Richtung des Pfeils 54 aus dem Rahmen bzw. dem Gehäuse herausziehen, um bedarfsweise entgegengesetzt zu Pfeil 54 gegen neue bzw. reaktivierte Filter ausgetauscht zu werden. Die mit dem Pfeil 54 angedeutete Bewegungsrichtung der Filtermodule liegt im wesentlichen orthogonal zur Strömungsrichtung des Schadgases, wobei diese Strömungsrichtung im wesentlichen orthogonal zur Zeichenebene verläuft.

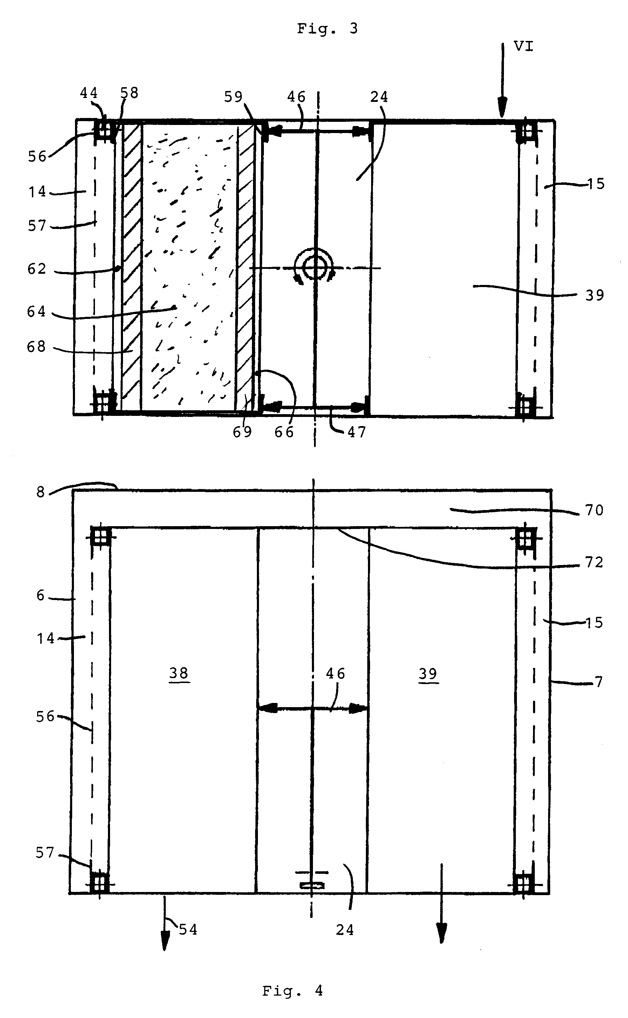

Fig. 3 zeigt schematisch und vergrößert einen Teil des Gasfilters mit zwei Filtermodulen 38, 39. Der Rahmen 4 besitzt im Bereich des jeweiligen Einströmungskanals 14, 15 Anlageelemente 56, 57 für die Dichtung 44. Das hinter der Zeichenebene liegende Anlageelement 57 ist aus Gründen der Übersicht lediglich als gestrichelte Linie angedeutet. Wie bereits erläutert, erstreckt sich die Dichtung 44 rundum über die Öffnung der Kammer im Bereich des Einströmkanals 14 bzw. 15. Das Filtermodul 38 ist als ein im Prinzip geschlossener Kasten aus Blech oder dergleichen ausgebildet, jedoch zum Einströmkanal 14 bzw. 15 sowie zum gemeinsamen Abströmkanal 24 hin offen ausgebildet, wobei jedoch dort vergleichsweise schmale Ränder 58, 59 vorhanden sind. Die Ränder 58 sind zweckmäßig vertikal ausgerichtet, verlaufen über den gesamten Umfang und dienen zur Anlage der gleichfalls umlaufenden Dichtung 44. Im Abströmkanal 24 sind die Spannelemente 46, 47 angeordnet, mittels welchen die beiden Filtermodule 38, 39 insbesondere in horizontaler Richtung gegeneinander verspannt und nach außen an die jeweiligen Dichtungen 44, 45 angepreßt werden. Die Spannelemente 46, 47 sind hier nur schematisch angedeutet und können insbesondere als Spannhebel mit gemeinsamer zentraler Betätigung ausgebildet sein. Sind in dem Rahmen bzw. Gehäuse, wie anhand von Fig. 1 und 2 bereits erläutert, noch weitere Filtermodule angeordnet, so ist für sämtliche Filtermodule zweckmäßig eine einzige gemeinsame Betätigungsvorrichtung mit den Spannelementen 46, 47 vorgesehen, wodurch eine hohe Betriebssicherheit gewährleistet ist, da beim Austausch der Filtermodule das Festspannen einzelner Filtermodule praktisch nicht vergessen werden kann.

Nachfolgend wird eine besondere Ausgestaltung des erfindungsgemäßen Filtermoduls 38 näher erläutert. Der erfindungsgemäße Filtereinsatz oder Filtermodul enthält einen Vorfilter 62 aus Vlies oder dergleichen zum Abhalten von Staubpartikeln oder ähnlichem, welche das Schadgas auf der Einströmseite mitführt. Innen ist die Filtermasse, insbesondere der Aktivkohlefilter 64, vorgesehen und an der Abströmseite ist ein Feinfilter 66 vorhanden, mittels welchem Partikel des Aktivkohlefilters zurückgehalten werden. Zwischen der Filtermasse bzw. dem Aktivkohlefilter 64 und dem Vorfilter 62 einerseits sowie dem Feinfilter 66 andererseits ist jeweils eine Zwischenschicht 68, 69 aus vorgespanntem Schaumstoff oder dergleichen angeordnet. Die Zwischenschichten 68, 69 sind ebenso wie die genannten Filter vom Gasstrom durchströmbar. Bei der Fertigung des Filtermoduls 38 wird die Filtermasse 64, insbesondere aus Aktivkohle, welche aus einzelnen mehr oder weniger großen Teilstücken besteht, in das Gehäuse des Filtermoduls eingebracht, wobei die erfindungsgemäß federelastisch nachgiebigen Zwischenschichten 68, 69 vorgespannt werden. Das Gehäuse des Filtermoduls 38 weist eine großformatige Montageöffnung 60 auf, welche erfindungsgemäß mittels eines Deckels dicht verschlossen ist und durch welche die Filtermasse 64 und die anderen Filter problemlos eingefüllt bzw. eingesetzt werden können. Werden während des Betriebs, beispielsweise durch Vibrationen oder Erschütterungen die einzelnen Filterstücke noch weiter zusammengerüttelt oder zusammengedrückt, so erfolgt mittels der Zwischenschicht 68, 69 ein Volumenausgleich derart, daß in der Filtermasse selbst keine Hohlräume auftreten und keine Gasdurchbrüche zu befürchten sind.

Fig. 4 zeigt eine Aufsicht auf die beiden horizontal nebeneinanderliegenden Filtermodule 38, 39 gemäß Fig. 3, wobei hier von den beiden übereinanderliegenden Spannelementen 46, 47 nur das obere Spannelement 46 zu erkennen ist. Das Spannelement 46 und ebenso das darunter liegende andere Spannelement greifen im wesentlichen in der Mitte der Längserstreckung der Filtermodule 38 an diesen an. Damit wird ein Verkanten und ggfs. eine unvollständige Abdichtung zwischen Rahmen und Filtermodulen 38, 39 vermieden. Bei dieser Ausführungsform ist zwischen der Rückwand 8 des Gehäuses 2 und dem Rahmen 4 noch ein Verbindungskanal 70 vorhanden, über welchen die Einströmkanäle 14, 15 miteinander in Verbindung stehen. Zusätzlich oder alternativ zu den in den Seitenwänden 6, 7 angeordneten Einströmöffnungen kann auch in der Rückwand 8 eine Einströmöffnung angeordnet sein, wobei über den Verbindungskanal 70 das einströmende Schadgas zu den seitlichen Kanälen 14, 15 und von dort zu den Filtermodulen gelangen kann. Der Verbindungskanal 70 ist vom Abströmkanal 24 durch eine Zwischenwand 72 des Rahmens getrennt. Sofern die Spannelemente 46 und das andere Spannelement gelöst sind und ferner die hier nicht weiter dargestellte vordere Tür geöffnet ist, können die einzelnen Filtermodule 38, 39 in Richtung der Pfeile 54 nach vorn herausgezogen werden.

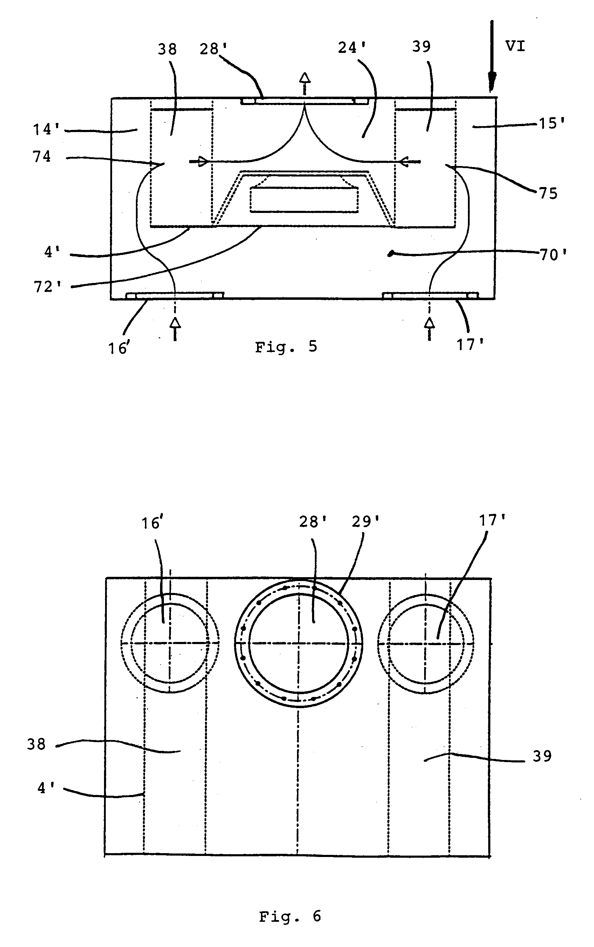

Fig. 5 und 6 zeigen eine Ausführungsform des Gasfilters für den Einbau unmittelbar über einem Labor-Arbeitsplatz oder dergleichen. Das Gehäuse 2' weist an seiner Unterseite die beiden Einströmöffnungen 16' und 17' auf und enthält im Inneren den Rahmen 4 zur Aufnahme der beiden Filtermodule 38, 39. Die Filtermodule 38, 39 werden vom Schadgas gemäß den Pfeilen 74, 75 wiederum im wesentlichen in horizontaler Richtung durchströmt. Das gereinigte Gas gelangt in den zentralen Abströmkanal 24' und von dort zur Austrittsöffnung 28'. Im Bereich des Abströmkanals 24, welcher mittels der Zwischenwand 72' vom Verbindungskanal 70' getrennt ist, ist ein Ventilator 50' angeordnet, um bedarfsweise einen Druckabfall zu kompensieren.

Fig. 6 zeigt die Aufsicht von oben, wobei die Ausströmöffnung 28' mit dem Blockflansch 29' unmittelbar zu erkennen ist, während die an der Unterseite des Gehäuses 2' befindlichen Eintrittsöffnungen 16', 17' mit punktierten Linien dargestellt sind. Des weiteren sind die im Inneren des Gehäuses 4 angeordneten und sich über die gesamte Tiefe des Gehäuses 4 erstreckenden Filtermodule 38, 39 gleichfalls mit punktierten Linien angedeutet.

### Bezugszeichen

- 2: Gehäuse
- 4: Rahmen
- 6, 7: Seitenwand
- 8: Rückwand
- 10: Boden
- 12: Decke
- 14, 15: erster Kanal/Einströmkanal
- 16, 17: Öffnung
- 18, 19: Blockflansch
- 20, 21: Außenwand
- 22, 23: Innenwand
- 24: zentraler Kanal/Abströmkanal
- 26: Meßraum
- 28: Austrittsöffnung
- 29: Blockflansch
- 31 - 36: Kammer
- 38, 39: Filtereinsatz / Filtermodul
- 40: Pfeil / Schadgas
- 42: Pfeil / gereinigtes Gas
- 44: Dichtung
- 45: zentrales Bedienelement
- 46, 47: Spannelement
- 48: Meßwertgeber
- 50: Ventilator
- 52: Tür
- 54: Pfeil
- 56, 57: Anlageelement von 4
- 58, 59: Rand von 38, 39
- 60: Montageöffnung von 38
- 61: Deckel
- 62: Vorfilter
- 64: Filtermasse / Aktivkohlefilter
- 66: Feinfilter
- 68, 69: Zwischenschicht
- 70: Verbindungskanal
- 72: Zwischenwand
- 74, 75: Pfeil

## Patentansprüche

1. Gasfilter, insbesondere Abluftfilter, enthaltend ein Gehäuse (2) und im Inneren wenigstens einen Filtermodul (38, 39) mit einer Filtermasse (64), insbesondere aus Aktivkohle, sowie eine Einströmöffnung (16, 17) für Schadgas und ferner eine Austrittsöffnung (28) für gereinigtes Gas
**dadurch gekennzeichnet**, daß im Gehäuse (2) ein Rahmen (4) zur Aufnahme von vorzugsweise wenigstens zwei der genannten Filtermodule (38, 39) vorgesehen ist, daß die Filtermodule (38, 39) in den Rahmen (4) einsetzbar und aus diesem herausnehmbar angeordnet sind und daß Spannelemente (46, 47) zum dichten Einspannen der Filtermodule (38, 39) im Gehäuse (2) vorgesehen sind.

2. Gasfilter nach Anspruch 1, dadurch gekennzeichnet, daß der Rahmen (4) einen Einströmkanal (14, 15) begrenzt, daß zwischen dem jeweiligen Filtermodul (38, 39) und dem Rahmen (4), vorzugsweise an der Seite und/oder im Bereich zum Einströmkanal (14, 15) hin, eine Dichtung (44) vorgesehen ist und daß mittels der Spannelemente (46, 47) der Filtermodul bezüglich des Rahmens (4) derart abgedichtet ist, daß das aus dem Einströmkanal (14, 15) einströmende Gas vollständig in den Filtermodul (38, 39) einströmt.

3. Gasfilter nach Anspruch 1 oder 2, dadurch gekennzeichnet, daß die Filtermodule (38, 39) im wesentlichen quer zur Strömungsrichtung des durchströmenden Gases in den Rahmen (4) einsetzbar und herausnehmbar sind und/oder daß die Filtermodule (38) mittels eines zentralen Bedienungselements (54) und der Spannelemente (46, 47) gemeinsam an den Rahmen (4) dicht anpreßbar sind und/oder daß der Rahmen (4) und der Filtermodul (38, 39) derart aufeinander abgestimmt sind, daß der Filtermodul (38, 39) quer zur Einschubrichtung im Rahmen (4) zurm Anpressen mittels der Spannelemente (46, 47) verschiebbar ist.

4. Gasfilter nach einem der Ansprüche 1 bis 3, dadurch gekennzeichnet, daß jeweils zwei Filtermodule (38, 39) einander gegenüberliegend angeordnet sind, daß zwischen den Filtermodulen (38, 39) ein gemeinsamer zentraler Kanal (24) angeordnet ist, durch welchen das gereinigte Gas vorzugsweise vertikal nach oben zur Austrittsöffnung (28) abströmen oder vorzugsweise vertikal nach unten einströmen kann.

5. Gasfilter, insbesondere nach Anspruch 1 oder 2, dadurch gekennzeichnet, daß der Filtermodul (38, 39) als Triplefilter mit einem eingangsseitigen Vorfilter (62) und einem ausgangsseitigen Feinfilter (66) ausgebildet ist, zwischen welchen die Filtermasse (64), insbesondere aus Aktivkohle, angeordnet ist und/oder daß die Filtermasse (64) mittels wenigstens einer vorgespannten Zwischenschicht (68, 69), insbesondere aus gasdurchlässigem Schaumstoff oder dergleichen beaufschlagt ist und/oder daß das Gehäuse des Filtermoduls (38, 39) eine großformatige Montageöffnung (60) aufweist, welche mittels eines Deckels (61) dicht verschließbar ist.

6. Gasfilter nach einem der Ansprüche 1 bis 5, dadurch gekennzeichnet, daß der im Inneren des Gehäuses (2) angeordnete Rahmen (4) wenigstens zwei Kammern (31-36) zur Aufnahme der Filtermodule (38, 39) aufweist und/oder daß vorzugsweise im zentralen Kanal (24) die Spannelemente (46, 47) vorgesehen sind, mittels welchen die Filtermodule (38, 39) in den Kammern (31, 36) festspannbar sind, wobei vorzugsweise zu dem Einströmkanal (14, 15) hin im Bereich der Kammern (31, 36) die Dichtungen (44) vorgesehen sind.

7. Gasfilter nach einem der Ansprüche 1 bis 6, dadurch gekennzeichnet, daß das Gehäuse (2), vorzugsweise an seiner Vorderseite, eine Tür (52) aufweist und daß bei geöffneter Tür (52) die einzelnen Filtermodule (38, 39) zugänglich und/oder aus dem Rahmen (4) herausnehmbar sind und/oder daß zwischen dem Rahmen (4) und Seitenwänden (6, 7) des Gehäuses (4) die ersten Kanäle (14, 15) angeordnet sind, welche wahlweise als Einströmkanäle oder als Abströmkanäle ausgebildet sind.

8. Gasfilter nach einem der Ansprüche 1 bis 7, dadurch gekennzeichnet, daß ein Adsorptions-Controller vorgesehen ist, dessen Meßwertgeber (48) in Strömungsrichtung hinter den Filtermodulen (38, 39), vorzugsweise in einem oberhalb der Filtermodule (38, 39) vorgesehenen Meßraum (26) und/oder im Abströmkanal (24) angeordnet ist.

9. Gasfilter nach einem der Ansprüche 1 bis 9, dadurch gekennzeichnet, daß die Filtermodule (38, 39) mittels der insbesondere im zentralen Kanal (24) angeordneten Spannelemente (46, 47) im Rahmen (4) festspannbar ist, wobei insbesondere auf der Seite zum Einströmkanal (14, 15) zwischen dem Rahmen (4) und dem Filtermodul (38, 39) die Dichtung (44) vorgesehen ist, an welcher der jeweilige Filtermodul (38, 39) angepresst wird, und/oder daß der Rahmen (4) für jeden Filtermodul (38, 39) eine erste Öffnung zum Einströmkanal und eine zweite Öffnung zum Abströmkanal hin aufweist, wobei diese beiden Öffnungen vorzugsweise parallel zueinander angeordnet sind, sowie eine weitere seitliche Öffnung aufweist, durch welche hindurch der Filtermodul (38, 39) in den Rahmen (4) und/oder deren Kammer (31, 36) eingeschoben oder aus jenen wieder herausgezogen werden kann.

10. Gasfilter nach einem der Ansprüche 1 bis 9, dadurch gekennzeichnet, daß mittels des Spannelements (46, 47) jeweils zwei im wesentlichen in der gleichen horizontalen Ebene angeordnete Filtermodule (38, 39) in entgegengesetzter Richtung verspannt werden und/oder daß die gemeinsamen Betätigungselemente der Spannelemente (46, 47) im zentralen Kanal (24) angeordnet sind und/oder daß die Spannelemente sämtlicher Filtermodule (38, 39) mittels des zentralen Bedienungselements (45) gemeinsam betätigbar sind.
